# EUROPEAN PATENT SPECIFICATION

(11) **EP 2 778 475 B1**
(45) Date of publication and mention of the grant of the patent: **09.10.2019**
(21) Application number: 12847390.7
(22) Date of filing: 12.11.2012
(51) Int. Cl.: F16H 25/22, F16C 19/46, F16C 33/12, F16C 33/20, F16H 25/20, F16H 55/17

(54) **ELECTRIC LINEAR ACTUATOR**
ELEKTRISCHER LINEARANTRIEB
ACTIONNEUR LINÉAIRE ÉLECTRIQUE

(30) Priority: 11.11.2011 JP 2011247259
(43) Date of publication of application: 17.09.2014
(73) Proprietor: NTN Corporation, Osaka-shi, Osaka 550-0003 (JP)
(72) Inventor: IKEDA, Yoshinori, Iwata-shi Shizuoka 438-8510 (JP)
(74) Representative: Cohausz & Florack
(86) International application number: PCT/JP2012/079311
(87) International publication number: WO 2013/069801

(56) References cited:
- GB-A- 1 234 988
- JP-A- 2007 046 637
- JP-A- 2008 006 868
- JP-A- 2008 006 868
- JP-A- 2008 312 433
- US-A- 3 674 689
- US-A1- 2003 233 896
- US-A1- 2007 271 789
- US-B1- 6 240 797

## Description

### Field of the Invention

The present invention relates to an electric actuator provided with a ball screw mechanism used in motors in general industries and driving sections of automobiles etc., and more particularly to an electric actuator used in a transmission or a parking brake for converting a rotary motion from an electric motor to a linear motion of a driving shaft via a ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly increase of sizes of electric motors and power consumption are obliged. Accordingly, the ball screw mechanisms have been widely adopted as more efficient actuators.

In an electric linear actuator of the prior art, an output member connected to a nut can be axially displaced by rotationally driving a ball screw shaft forming a ball screw with use of an electric motor supported on a housing. In usual, since friction of the ball screw mechanism is very low, the ball screw shaft tends to be reversely rotated easily when a pushing thrust load is applied to the output member, and accordingly it is necessary to hold the position of the output member when the electric motor is stopped.

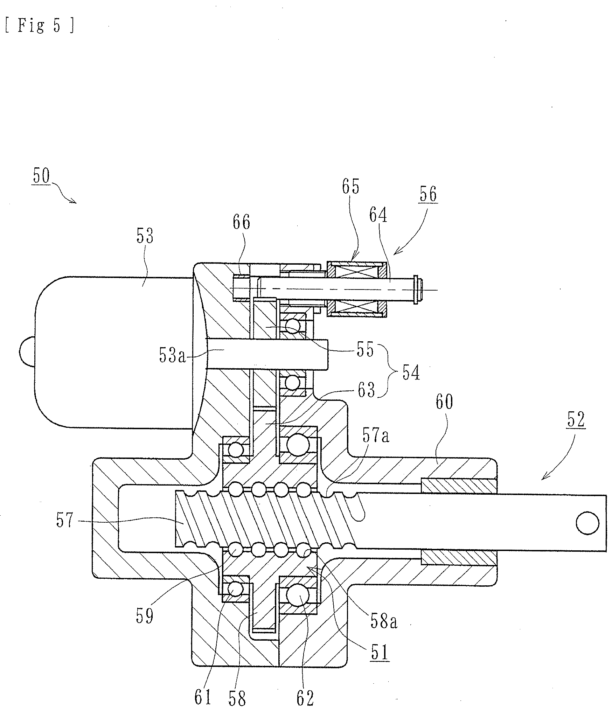

Accordingly, it has been developed an electric linear actuator in which a brake means is arranged for an electric motor or a low efficient means such as a worm gear is provided as a power transmitting means. In Fig. 5, one representative example of them is shown and it comprises an actuator main body 52 having a ball screw 51 for converting the rotational motion to the linear motion, a speed reduction mechanism 54 for transmitting the rotational motion of an electric motor 53 to the actuator main body 52 with reducing the rotational speed of the motor 53, and a position holding mechanism 56 for holding the position of the actuator main body 52 through its engagement with a first gear 55 forming part of the speed reduction mechanism 54.

The ball screw 51 comprises a screw shaft 57 acting as an output shaft formed with a helical screw groove 57a on its outer circumference, a nut 58 fitted on the screw shaft 57 and formed with a helical screw groove 58a on its inner circumference, and a number of balls 59 rollably contained in a rolling path formed by the opposite screw grooves 57a, 58a.

The actuator main body 52 comprises the nut 58 rotationally supported on the inner circumference of a housing 60 by a pair of ball bearings 61, 62, and the screw shaft 57 supported axially movably but not rotationally relative to the housing 60. Thus, the rotational motion of the nut 58 driven by the speed reduction mechanism 54 can be converted to the linear motion of the screw shaft 57.

The speed reduction mechanism 54 comprises the first gear 55 formed as a small spur gear fitted on a motor shaft 53a of the electric motor 53, and a second gear 63 mating with the first gear 55 and formed integrally with the nut 58 as a large spur gear.

The position holding mechanism 56 comprises a shaft 64 functioning as a locking member and adapted to be engaged with the first gear 55, and a solenoid 65 functioning as a driving means for engaging and disengaging the shaft 64 with the first gear 55. The shaft 64 has a rod-like configuration and is linearly driven by the solenoid 65 so that its tip end can be received in a recess 66. Since rotation of first gear 55 can be prevented by the shaft 64 due to engagement of the shaft 64 with the first gear 55 by controlling the solenoid 65, it is possible to stably hold the position of the screw shaft 57 of the actuator main body 52 (see e.g. Patent Document 1 below).

### Document of the Prior Art

### Patent Document

Patent Document 1: JP 2009 -156416 A JP 2008-006868 A shows an electric power steering device comprising a main body and an end cover, wherein an intermediate gear shaft is rotatably supported by the housing main body.

### Disclosure of the Invention

### Problems to be solved by the Invention

In the electric linear actuator 50 of the prior art, since the rotation of first gear 55 can be firmly prevented by the shaft 64 due to engagement of the shaft 64 with the first gear 55 by controlling the solenoid 65, it is possible to stably hold the position of the screw shaft 57 of the actuator main body 52 without causing any slippage between engaging surfaces.

However, it is afraid that the control of the electric linear actuator 50 would be impossible in a case of power deficiency due to voltage drop of a battery. Under the circumstances, the nut 58 would be reversely rotated and continue the reverse rotation due to its inertia moment when a pushing thrust load is applied to the screw shaft 57. As the result, it is afraid that the tip end of the screw shaft 57 would be abutted against an inner wall surface of the housing 60 and thus cause locking of operation which would disable return of the screw shaft 57 by the electric motor 53 itself.

In addition, in the speed reduction mechanism 54 comprising a one-stage combination of the first gear 55 and second gear 63, it is also possible to adopt a two-stage combination by providing a shaft between the motor shaft 53a and the screw shaft 57 when it is desired to have a large reduction ratio and to overcome limitation in layout of the speed reduction mechanism 54. In such a case, it is preferable to have a speed reduction mechanism improved in performance of rotation with suppressing problems such as increase of manufacturing cost due to increase of weight and of numbers of components.

It is, therefore, an object of the present invention to provide an electric linear actuator having high rotational performance which can prevent the operation lock of the ball screw and can be manufactured at a low cost.

### Means for solving the Problems

For achieving the object of the present invention, there is provided an electric linear actuator according to claim 1.

As defined in claim 1, since the intermediate gear is rotationally supported via a rolling bearing on a shaft supported at its opposite ends on the first and second housings, the rotational force generated on the output gear by the screw groove of the ball screw can be smoothly transmitted toward a direction for relieving the rotational force and thus the locking of operation is also relieved due to the structure of the shaft freely rotationally supported by the rolling bearing, although the supporting bearing of the first housing side is urged toward the second housing side due to reaction caused by abutment of the screw shaft against the wall surface of the housing and accordingly rotational force is caused on the output gear by the screw groove of the ball screw. Thus it is possible to provide a electric linear actuator of low manufacturing cost which can avoid the locking of operation and has excellent rotational performance. In addition, since rolling bearings of standard design can be adopted in consideration of the load capacity, manufacturing cost can be suppressed without excessive increase of the number of components. Furthermore, since it is unnecessary to newly arrange both-side rolling bearings for the intermediate gear by arranging a single rolling bearing within the intermediate gear, it is possible to suitably and compactly bear a load applied on the intermediate gear without increase the axial dimension of the electric linear actuator.

It is preferable as defined in claim 2 that one end of the shaft is press-fitted into the first or second housing and the other end of the shaft is loose-fitted into the second or first housing. This makes it possible to assure smooth rotational performance with allowing misalignment.

It is also preferable as defined in claim 3 that the rolling bearing of the intermediate gear structured as a needle roller bearing of a shell type comprising an outer ring press-formed of steel sheet and press-fitted into an inner circumference of the intermediate gear, a plurality of needle rollers rollably contained in a cage. This makes it possible to use easily available popular needle roller bearings and thus to reduce its manufacturing cost.

It is preferable as defined in claim 4 that an axial width of the needle roller bearing of the intermediate gear is set smaller than a whole axial width of the intermediate gear. This makes it possible to prevent the side surfaces of the needle roller bearing from being worn and deformed and to obtain smooth rotational performance.

It is preferable as defined in claim 5 that ring-shaped flat washers are arranged at either side of the intermediate gear, and that a face width of gear teeth of the intermediate gear is formed smaller than the whole axial width of the intermediate gear. This makes it possible to prevent the intermediate gear from being directly contacted with the housing and to reduce contacting area between the intermediate gear and the flat washers and thus to achieve smooth rotational performance with suppressing frictional resistance during rotation.

It is also preferable as defined in claim 6 that the flat washers are formed of austenitic stainless steel sheet and as defined in claim 7 that the flat washers are formed of thermoplastic synthetic resin impregnated with a predetermined amount of fiber reinforcing material. This makes it possible to increase strength and anti-wear property of the flat washers and thus to improve durability thereof.

It is preferable as defined in claim 8 that the bearing the bearing of the intermediate gear is formed of a sliding bearing which is structured as an oil impregnated bearing formed of porous metal added by graphite fine powder, and that a whole axial width of the sliding bearing is formed larger than the whole axial width of the intermediate gear. This makes it possible to prevent the intermediate gear from being contacted with the first and second housings and worn without mounting any flat washers, to achieve smooth rotational performance with suppressing frictional resistance during rotation of the intermediate gear, and to reduce the manufacturing cost with suppressing increase of the number of components.

It is also preferable as defined in claim 9 that the sliding bearing is formed of thermoplastic polyimide resin. This makes it possible to reduce the manufacturing cost of the electric linear actuator and to improve the wear resisting performance.

### Effects of the Invention

According to the electric linear actuator of the present invention, the rotational force generated on the output gear by the screw groove of the ball screw can be smoothly transmitted toward a direction for relieving the rotational force and thus the locking of operation is also relieved due to the structure of the shaft freely rotationally supported by the bearing, although the supporting bearing of the first housing side is urged toward the second housing side due to reaction caused by abutment of the screw shaft against the wall surface of the housing and accordingly rotational force is caused on the output gear by the screw groove of the ball screw. Thus it is possible to provide an electric linear actuator of low manufacturing cost which can avoid the locking of operation and has excellent rotational performance. In addition, since bearings of standard design can be adopted in consideration of the load capacity, manufacturing cost can be suppressed without excessive increase of the number of components. Furthermore, since it is unnecessary to newly arrange both-side bearings for the intermediate gear by arranging a single bearing within the intermediate gear, it is possible to suitably and compactly bear a load applied on the intermediate gear without increase the axial dimension of the electric linear actuator.

### Brief description of the Drawings

[Fig. 1] A longitudinal section view showing one preferable embodiment of the electric linear actuator of the present invention;
[Fig. 2] A longitudinal section view showing an actuator main body of the electric linear actuator of Fig. 1;
[Fig. 3] A partially enlarged view showing an intermediate gear of the electric linear actuator of Fig. 1;
[Fig.4] A partially enlarged view showing a modification of the intermediate gear of Fig. 3; and
[Fig. 5] A longitudinal section view showing an electric linear actuator of the prior art.

### Mode for carrying out the Invention

One mode for carrying out the present invention is an electric linear actuator comprising a housing; an electric motor mounted on the housing; a speed reduction mechanism for transmitting the rotational power of the electric motor to a ball screw mechanism via a motor shaft with reducing a motor speed; and the ball screw mechanism for converting the rotational motion of the electric motor transmitted via the speed reduction mechanism to an axial linear motion of a driving shaft; the ball screw mechanism comprising a nut formed with a helical screw groove on its inner circumference and supported by bearings on the housing rotationally but axially immovably, and a screw shaft coaxially integrated with the driving shaft, formed with helical screw groove on its outer circumference corresponding to helical screw groove of the nut, adapted to be inserted into the nut via a large number of balls, and supported on the housing rotationally but axially immovably characterized in that the housing comprises a first housing and a second housing arranged with its end face being abutted against the end face of the first housing, the electric motor being mounted on the first housing and the bores formed in the first and second housings respectively for containing the screw shaft; that the speed reduction mechanism comprises an input gear fitted on the motor shaft, an intermediate gear mating with the input gear, and an output gear mating with the intermediate gear and secured on the nut; that the intermediate gear is rotationally supported via a bearing on a shaft supported at its opposite ends on the first and second housings; that ring-shaped flat washers are arranged at either side of the intermediate gear, and that a face width of gear teeth the intermediate gear is formed smaller than the whole axial width of the intermediate gear.

### Embodiments

Preferable embodiments of the present invention will be hereinafter described with reference to the drawings.

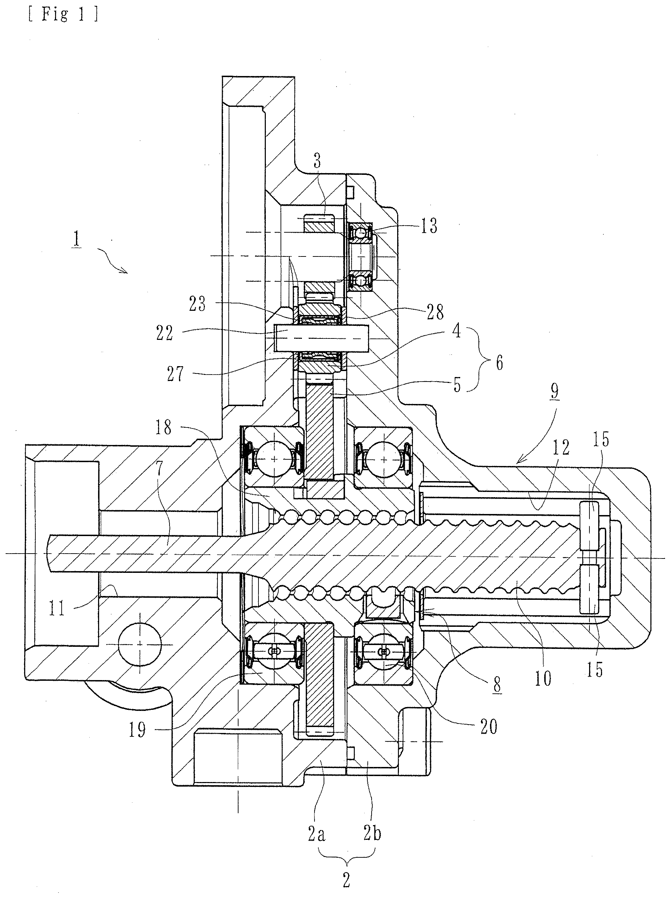

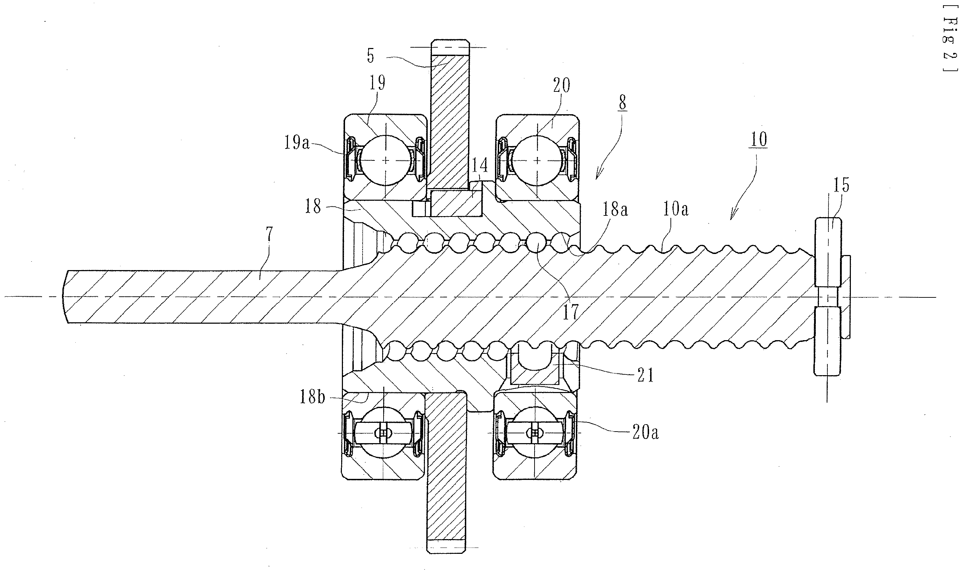

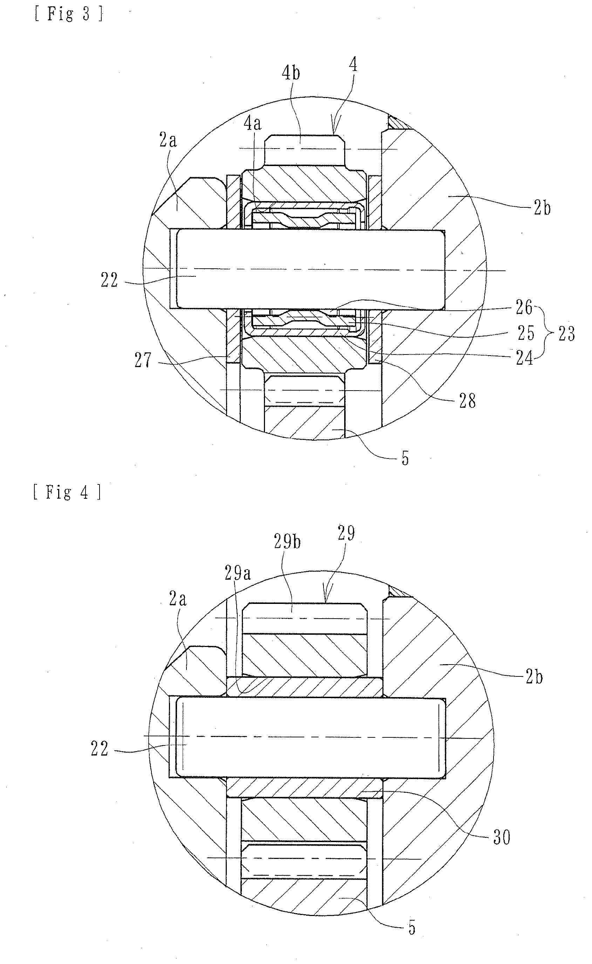

Fig. 1 is a longitudinal section view showing one preferable embodiment of the electric linear actuator of the present invention, Fig. 2 is a longitudinal section view showing an actuator main body of the electric linear actuator of Fig. 1, Fig. 3 is a partially enlarged view showing an intermediate gear of the electric linear actuator of Fig. 1, and Fig.4 is a partially enlarged view showing a modification of the intermediate gear of Fig. 3.

As shown in Fig. 1, an electric linear actuator 1 comprises a housing 2 formed of aluminum light alloy, an electric motor (not shown), an intermediate gear 4 mating with an input gear 3 mounted on a motor shaft (not shown) of the electric motor, a speed reduction mechanism 6 including the intermediate gear 4 and an output gear 5, a ball screw mechanism 8 for converting rotational motion of the electric motor to axial linear motion of a driving shaft 7 via the speed reduction mechanism 6, and actuator main body 9 including the ball screw mechanism 8.

The housing 2 comprises a first housing 2a and a second housing 2b adapted to be assembled with being abutted and integrally secured each other by fastening bolts (not shown). The electric motor can be mounted on the first housing 2a and an accommodating bore (through bore) 11 and an accommodating bore (blind bore) 12 for accommodating a screw shaft 10 are formed respectively in the first and second housings 2a, 2b.

The input gear 3 is mounted on an end of the motor shaft and rotationally supported by a rolling bearing 13 formed of a deep groove ball bearing mounted on the second housing 2b. The output gear 5 mating with the intermediate gear 4 formed of a spur gear is integrally secured on a nut 18 forming the ball screw mechanism 8 via a key 14 (Fig. 2).

The driving shaft 7 is integrated with the screw shaft 10 forming the ball screw mechanism 8 and engaging pins 15, 15 are arranged at one end (right side end in Fig. 1) of the driving shaft 7. These guide pins 15, 15 are engaged with a guide member mounted in the bore 12 of the housing 2b and formed with axially extending guiding grooves to guide the screw shaft 10 axially movably but not rotationally.

As shown in the enlarged view of Fig. 2, the ball screw mechanism 8 comprises the screw shaft 10 and the nut 18 fitted on the screw shaft 10 via balls 17. The screw shaft 10 is formed on its outer circumference with a helical screw groove 10a and supported axially movably but not rotationally. On the other hand, the nut 18 is formed on its inner circumference with a helical screw groove 18a corresponding to the helical screw groove 10a of the screw shaft 10 and a number of balls 17 are rollably accommodated between these screw grooves 10a and 18a. The nut 18 is supported on the first and second housings 2a, 2b by two bearings 19, 20 rotationally but axially immovably relative to the housings 2a, 2b. A numeral 21 denotes a bridge member for continuously circulating balls 17 through the screw groove 18a of the nut 18.

The cross-sectional configuration of each screw groove 10a and 18a may be either one of circular-arc or Gothic-arc configuration. However, this embodiment adopts the Gothic-arc configuration since it can have a large contacting angle with the ball 17 and a small axial gap. This enables to have large rigidity against the axial load and to suppress generation of vibration.

The nut 18 is formed of case hardened steel such as SCM415 or SCM420 and its surface is hardened to HRC 55∼62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM415 or SCM420 and its surface is hardened to HRC 55∼62 by induction hardening or carburizing hardening.

The output gear 5 forming the reduction mechanism 6 is integrally secured on the outer circumference 18b of the nut 18 and two supporting bearings 19, 20 are press-fitted onto either side of the output gear 5 via a predetermined interface. This makes it possible to prevent generation of axial positional displacement between the supporting bearings 19, 20 and the output gear 5 although a thrust load would be applied to them from the driving shaft 7. In addition, each of the supporting bearings 19 and 20 is formed of the deep groove ball bearing of sealed type in which shield plates 19a and 20a are arranged on either side of the support bearing to prevent leakage of grease contained in the bearings and penetration of worn powder or debris into the bearings from outside.

As shown in Fig. 3, the intermediate gear 4 is rotationally supported via a rolling bearing 23 on a shaft 22 supported at its opposite ends on the first and second housings 2a, 2b. A misalignment (assembling error) of the shaft 22 and the rolling bearing 23 can be allowed and smooth rotation of the intermediate gear 4 will be ensured for example by setting the end of the shaft 22 of second housing side via clearance fitting in case of setting the end of the shaft 22 of first housing side via press-fitting. In the embodiment illustrated in Fig. 3, the rolling bearing 23 is formed of a needle roller bearing of a shell type comprising an outer ring 24 press-formed of steel sheet and press-fitted into an inner circumference of the intermediate gear 4, and a plurality of needle rollers 26 rollably contained in a cage 25. This enables to adopt bearings of standard design in consideration of the load capacity, thus manufacturing cost can be also suppressed without excessive increase of the number of components.

In addition, ring-shaped flat washers 27, 28 are arranged at either side of the intermediate gear 4 to prevent the intermediate gear 4 from being directly contacted with the first and second housings 2a and 2b. Furthermore, a face width 4b of gear teeth of the intermediate gear 4 is formed smaller than the whole axial width of the intermediate gear 4. This makes it possible to reduce contacting area between the intermediate gear 4 and the flat washers 27, 28 and thus to achieve smooth rotational performance with suppressing frictional resistance during rotation. The flat washers 27, 28 are flat washers press-formed of austenitic stainless steel sheet (e.g. SUS304 of JIS) or preservative cold rolled steel sheet (e.g. SPCC of JIS). Alternatively, the flat washers 27, 28 may be formed of brass, sintered metal or thermoplastic synthetic resin such as PA (polyamide) 66 etc. in which a predetermined amount of fiber reinforcing materials such as GF (glass fibers) etc. is impregnated.

In addition, an axial width of the rolling bearing 23 of the intermediate gear 4 is set smaller than a whole axial width of the intermediate gear 4. This makes it possible to prevent the side surfaces of the rolling bearing 23 from being worn and deformed and to obtain smooth rotational performance.

A modification of Fig. 3 is shown in Fig. 4. An intermediate gear 29 is rotationally supported via a sliding bearing 30 on the shaft 22 supported at its opposite ends on the first and second housings 2a, 2b. According to this modification, a face width 29b of gear teeth of the intermediate gear 29 is formed in same as the whole axial width of the intermediate gear 29 and the sliding bearing 30 is structured as an oil impregnated bearing (e.g. "BEARFIGHT" (registered trade mark of the production of NTN corporation)) and press-fitted into the inner circumference 29a of the intermediate gear 29. A whole axial width of the sliding bearing 30 is formed larger than the whole axial width of the intermediate gear 29. This makes it possible to prevent the intermediate gear 29 from being contacted with the first and second housings 2a, 2b and worn without mounting any flat washers, to achieve smooth rotational performance with suppressing frictional resistance during rotation of the intermediate gear 29, and to reduce the manufacturing cost with suppressing increase of the number of components. The sliding bearing 30 may be formed of thermoplastic polyimide resin enabling injection molding.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

### [Applicability in Industries]

The electric linear actuator of the present invention can be applied to electric actuators used in an electric motor for general industries and driving sections of an automobile etc. and having ball screw mechanism for converting the rotational input from an electric motor to the linear motion of a driving shaft.

### Explanation of Reference numerals

- 1: electric linear actuator
- 2: housing
- 2a: first housing
- 2b: second housing
- 3: input gear
- 4, 29: intermediate gear
- 4a, 29a: inner circumference of intermediate gear
- 5: output gear
- 6: speed reduction mechanism
- 7: driving shaft
- 8: ball screw mechanism
- 9: actuator main body
- 10: screw shaft
- 10a, 18a: screw groove
- 11: accommodating bore (through bore)
- 12: accommodating bore (blind bore)
- 13, 23: rolling bearing
- 14: key
- 15: engaging pin
- 17: ball
- 18: nut
- 19, 20: supporting bearing
- 19a, 20a: shielding sheet
- 21: bridge member
- 22: shaft
- 24: outer ring
- 25: cage
- 26: needle roller
- 27, 28: flat washer
- 30: sliding bearing
- 50: electric linear actuator
- 51: ball screw
- 52: actuator main body
- 53: electric motor
- 54: speed reduction mechanism
- 55: first gear
- 56: position holding mechanism
- 57: screw shaft
- 57a, 58a: screw groove
- 58: nut
- 59: ball
- 60: housing
- 61, 62: ball bearing
- 63: second gear
- 64: shaft
- 65: solenoid
- 66: recess

## Claims

1. An electric linear actuator comprising:
a housing (2);
an electric motor mounted on the housing (2);
a speed reduction mechanism (6) for transmitting the rotational power of the electric motor to a ball screw mechanism (8) via a motor shaft with reducing a motor speed; and
the ball screw mechanism (8) for converting the rotational motion of the electric motor transmitted via the speed reduction mechanism (6) to an axial linear motion of a driving shaft (7); the ball screw mechanism (8) comprising a nut (18) formed with a helical screw groove (18a) on its inner circumference and supported by bearings (19, 20) on the housing (2) rotationally but axially immovably, and a screw shaft (10) coaxially integrated with the driving shaft (7), formed with helical screw groove (10a) on its outer circumference corresponding to helical screw groove (18a) of the nut (18), adapted to be inserted into the nut (18) via a large number of balls (17), and supported on the housing (2) axially movably but not rotationally wherein the housing (2) comprises a first housing (2a) and a second housing (2b) arranged with its end face being abutted against the end face of the first housing (2a), the electric motor being mounted on the first housing (2a) and the bores (11 and 12) formed in the first and second housings (2a and 2b) respectively for containing the screw shaft (10);
the speed reduction mechanism (6) comprises an input gear (3) secured on the motor shaft, an intermediate gear (4, 29) mating with the input gear (3), and an output gear (5) mating with the intermediate gear (4, 29) and secured on the nut (18); and
**characterized in**
**that** the intermediate gear (4, 29) is rotationally supported via a bearing (23 or 30) on a shaft (22) supported at its opposite ends on the first and second housings (2a, 2b).

2. An electric linear actuator of claim 1 wherein one end of the shaft (22) is press-fitted into the first or second housing (2a or 2b) and the other end of the shaft (22) is loose-fitted into the second or first housing (2b or 2a).

3. An electric linear actuator of claim 1 wherein the rolling bearing of the intermediate gear (4) structured as a needle roller bearing (23) of a shell type comprising an outer ring (24) press-formed of steel sheet and press-fitted into an inner circumference of the intermediate gear (4), a plurality of needle rollers (26) rollably contained in a cage (25).

4. An electric linear actuator of claim 3 wherein an axial width of the needle roller bearing (23) of the intermediate gear (4) is set smaller than a whole axial width of the intermediate gear (4).

5. An electric linear actuator of claim 3 or 4 wherein ring-shaped washers (27 and 28) are arranged at either side of the intermediate gear (4), and wherein a face width of gear teeth (4b) of the intermediate gear (4) is formed smaller than the whole axial width of the intermediate gear (4).

6. An electric linear actuator of claim 5 wherein the flat washers (27, 28) are formed of austenitic stainless steel sheet.

7. An electric linear actuator of claim 5 wherein the flat washers (27, 28) are formed of thermoplastic synthetic resin impregnated with a predetermined amount of fiber reinforcing material.

8. An electric linear actuator of claim 1 wherein the bearing of the intermediate gear (29) is formed of a sliding bearing (30) which is structured as an oil impregnated bearing formed of porous metal added by graphite fine powder, and wherein a whole axial width of the sliding bearing (30) is formed larger than the whole axial width of the intermediate gear (29).

9. An electric linear actuator of claim 8 wherein the sliding bearing (30) is formed of thermoplastic polyimide resin.

## Patentansprüche

1. Elektrischer Linearantrieb, Folgendes umfassend:
ein Gehäuse (2),
einen Elektromotor, der an das Gehäuse (2) montiert ist,
einen Drehzahlverringerungsmechanismus (6) zum Übertragen der Drehleistung des Elektromotors auf einen Kugelgewindetrieb-Mechanismus (8) über eine Motorwelle mit Verringerung einer Motordrehzahl und
den Kugelgewindetrieb-Mechanismus (8) zum Umwandeln der Drehbewegung des Elektromotors, die über den Drehzahlverringerungsmechanismus (6) übertragen wird, in eine axiale Linearbewegung einer Antriebswelle (7), wobei der Kugelgewindetrieb-Mechanismus (8) eine Mutter (18) umfasst, die mit einer spiralförmigen Schraubrille (18a) an ihrem Innenumfang gebildet ist und von Lagern (19, 20) an dem Gehäuse (2) drehbar, aber axial unbeweglich getragen wird, und eine Schraubwelle (10), die koaxial in die Antriebswelle (7) integriert ist und die mit einer spiralförmigen Schraubrille (10a) an ihrem Außenumfang gebildet ist, welche der spiralförmigen Schraubrille (18a) der Mutter (18) entspricht, dafür eingerichtet, über eine große Anzahl Kugeln (17) in die Mutter (18) eingesetzt zu sein, und axial beweglich, aber nicht drehbar an dem Gehäuse (2) getragen,
wobei das Gehäuse (2) ein erstes Gehäuse (2a) und ein zweites Gehäuse (2b) umfasst, das mit seiner Stirnseite an der Stirnseite des ersten Gehäuses (2a) anliegend angeordnet ist, wobei der Elektromotor an das erste Gehäuse (2a) und die Bohrungen (11 und 12) montiert ist, die entsprechend in dem ersten und dem zweiten Gehäuse (2a und 2b) gebildet sind, um die Schraubwelle (10) zu enthalten,
wobei der Drehzahlverringerungsmechanismus (6) ein Antriebszahnrad (3), das an der Motorwelle gesichert ist, ein Mittelzahnrad (4, 29), das mit dem Antriebszahnrad (3) zusammenpasst, und ein Abtriebszahnrad (5), das mit dem Mittelzahnrad (4, 29) zusammenpasst und an der Mutter (18) gesichert ist, umfasst, und
**dadurch gekennzeichnet, dass** das Mittelzahnrad (4, 29) über ein Lager (23 oder 30) drehbar auf einer Welle (22) getragen wird, die an ihren gegenüberliegenden Enden am ersten und am zweiten Gehäuse (2a, 2b) getragen wird.

2. Elektrischer Linearantrieb nach Anspruch 1, wobei ein Ende der Welle (22) in das erste oder das zweite Gehäuse (2a oder 2b) eingepresst ist und das andere Ende der Welle (22) lose in das zweite oder erste Gehäuse (2a oder 2b) eingepasst ist.

3. Elektrischer Linearantrieb nach Anspruch 1, wobei das Wälzlager des Mittelzahnrads (4), das als ein Nadellager (23) einer Mantelart strukturiert ist, einen äußeren Ring (24) umfasst, der aus Stahlblech formgepresst ist und in einen Innenumfang des Mittelzahnrads (4) eingepresst ist, wobei mehrere Nadelrollen (26) rollfähig in einem Käfig (25) enthalten sind.

4. Elektrischer Linearantrieb nach Anspruch 3, wobei eine axiale Breite des Nadellagers (23) des Mittelzahnrads (4) kleiner eingestellt ist als eine gesamte axiale Breite des Mittelzahnrads (4).

5. Elektrischer Linearantrieb nach Anspruch 3 oder 4, wobei an jeder Seite des Mittelzahnrads (4) ringförmige Unterlegscheiben (27 und 28) angeordnet sind und wobei eine Zahnbreite von Zahnradzähnen (4b) des Mittelzahnrads (4) kleiner als die gesamte axiale Breite des Mittelzahnrads (4) gebildet ist.

6. Elektrischer Linearantrieb nach Anspruch 5, wobei die flachen Unterlegscheiben (27, 28) aus austenitischem rostfreiem Stahl gebildet sind.

7. Elektrischer Linearantrieb nach Anspruch 5, wobei die flachen Unterlegscheiben (27, 28) aus thermoplastischem Kunstharz gebildet sind, das mit einer festgelegten Menge Verstärkungsfasermaterial imprägniert ist.

8. Elektrischer Linearantrieb nach Anspruch 1, wobei das Lager des Mittelzahnrades (29) aus einem Gleitlager (30) gebildet ist, das als ein ölimprägniertes Lager strukturiert ist, das aus porösem Metall, dem Graphit-Feinpulver zugesetzt ist, gebildet ist, und wobei eine gesamte axiale Breite des Gleitlagers (30) größer als die gesamte axiale Breite des Mittellagers (29) gebildet ist.

9. Elektrischer Linearantrieb nach Anspruch 8, wobei das Gleitgetriebe aus thermoplastischem Polyimidharz gebildet ist.

## Revendications

1. Actionneur linéaire électrique, comprenant :
un boîtier (2) ;
un moteur électrique monté sur le boîtier (2) ;
un mécanisme réducteur de vitesse (6) destiné à transmettre la puissance rotative du moteur électrique à un mécanisme à vis à bille (8) par le biais d'un arbre de moteur avec réduction d'une vitesse du moteur ; et
le mécanisme à vis à bille (8) destiné à convertir le mouvement rotatif du moteur électrique, transmis par le biais du mécanisme réducteur de vitesse (6), en un mouvement linéaire axial d'un arbre d'entraînement (7) ; le mécanisme à vis à bille (8) comprenant un écrou (18), sur la circonférence interne duquel est formée une gorge de vis hélicoïdale (18a) et qui supporté à rotation par des paliers (19, 20) sur le boîtier (2), mais immobile dans le sens axial, et une tige de vis (10) intégrée de manière coaxiale avec l'arbre d'entraînement (7), sur la circonférence externe de laquelle est formée une gorge de vis hélicoïdale (10a) correspondant à la gorge de vis hélicoïdale (18a) de l'écrou (18), adaptée pour être insérée dans l'écrou (18) par le biais d'un grand nombre de billes (17) et supportée dans le boîtier (2) avec mobilité axiale, mais pas à rotation,
le boîtier (2) comprenant un premier boîtier (2a) et un deuxième boîtier (2b) disposé avec sa face d'extrémité en butée contre la face d'extrémité du premier boîtier (2a), le moteur électrique étant monté sur le premier boîtier (2a), et des alésages (11 et 12) respectivement formés dans les premier et deuxième boîtiers (2a et 2b) pour contenir la tige de vis (10) ;
le mécanisme réducteur de vitesse (6) comprenant un pignon d'entrée (3) fixé sur l'arbre de moteur, un pignon intermédiaire (4, 29) qui s'accouple avec le pignon d'entrée (3), et un pignon de sortie (5) qui s'accouple avec le pignon intermédiaire (4, 29) et qui est fixé sur l'écrou (18) ; et
**caractérisé en ce que** le pignon intermédiaire (4, 29) est supporté à rotation par le biais d'un palier (23 ou 30) sur un arbre (22) supporté au niveau de ses extrémités opposées sur les premier et deuxième boîtiers (2a, 2b).

2. Actionneur linéaire électrique selon la revendication 1, une extrémité de l'arbre (22) étant emmanchée de force dans le premier ou le deuxième boîtier (2a ou 2b) et l'autre extrémité de l'arbre (22) étant ajustée librement dans le deuxième ou le premier boîtier (2b ou 2a).

3. Actionneur linéaire électrique selon la revendication 1, le palier de roulement du pignon intermédiaire (4) étant structuré comme un palier de roulement à aiguilles (23) d'un type à coussinet, comprenant une bague externe (24) formée à la presse à partir d'une tôle d'acier et emmanchée de force dans une circonférence interne du pignon intermédiaire (4), une pluralité de roulements à aiguilles (26) étant contenue à rotation dans une cage (25).

4. Actionneur linéaire électrique selon la revendication 3, une largeur axiale du palier de roulement à aiguilles (23) du pignon intermédiaire (4) étant définie plus petite qu'une largeur axiale totale du pignon intermédiaire (4).

5. Actionneur linéaire électrique selon la revendication 3 ou 4, des rondelles de forme annulaire (27 et 28) étant disposées des deux côtés du pignon intermédiaire (4) et une largeur de denture des dents d'engrenage (4b) du pignon intermédiaire (4) étant réalisée plus petite que la largeur axiale totale du pignon intermédiaire (4).

6. Actionneur linéaire électrique selon la revendication 5, les rondelles plates (27, 28) étant constituées d'une tôle en acier inoxydable austénitique.

7. Actionneur linéaire électrique selon la revendication 5, les rondelles plates (27, 28) étant constituées de résine synthétique thermoplastique imprégnée d'une quantité prédéterminée de matériau de renforcement à fibres.

8. Actionneur linéaire électrique selon la revendication 1, le palier du pignon intermédiaire (29) étant formé par un palier coulissant (30) qui est structuré comme un palier imprégné d'huile constitué de métal poreux auquel a été ajoutée une poudre fine de graphite, et une largeur axiale totale du palier coulissant (30) étant réalisée plus grande que la largeur axiale totale du pignon intermédiaire (29).

9. Actionneur linéaire électrique selon la revendication 8, le palier coulissant (30) étant constitué de résine de polyimide thermoplastique.
